# EUROPEAN PATENT SPECIFICATION

(11) **EP 3 130 220 B1**
(45) Date of publication and mention of the grant of the patent: **20.12.2017**
(21) Application number: 15776165.1
(22) Date of filing: 06.02.2015
(51) Int. Cl.: A01G 31/00, A01G 7/00, A01G 9/00, A01G 31/02, A01G 1/00, A01G 9/24

(54) **HYDROPONIC APPARATUS AND HYDROPONIC METHOD**
VORRICHTUNG UND VERFAHREN FÜR HYDROKULTUR
APPAREIL DE CULTURE HYDROPONIQUE ET PROCÉDÉ DE CULTURE HYDROPONIQUE

(30) Priority: 11.04.2014 JP 2014081747
(43) Date of publication of application: 15.02.2017
(73) Proprietor: Panasonic Intellectual Property Management Co., Ltd., Osaka-shi, Osaka 540-6207 (JP)
(72) Inventor: OGATA, Satoshi, Chuo-ku Osaka-shi, Osaka 540-6207 (JP)
(74) Representative: Müller-Boré & Partner Patentanwälte PartG mbB
(86) International application number: PCT/JP2015/000566
(87) International publication number: WO 2015/155915

(56) References cited:
- JP-A- 2012 231 729
- JP-A- 2013 051 941
- JP-A- 2013 111 073
- JP-A- 2013 111 073
- JP-A- 2013 162 750
- US-A- 4 332 105
- US-A- 4 669 217
- US-A- 5 136 804
- US-A1- 2013 003 382
- US-A1- 2013 160 362

## Description

### TECHNICAL FIELD

The present invention relates to a hydroponic apparatus and a hydroponic method for growing plants by hydroponics.

### BACKGROUND ART

As nutrient solution culture that grows plants without using soil, hydroponics has been known which cultivates plants with the roots of the plants soaked in nutrient solution (see Patent Literature 1). In the case where plants that yield products such as stem tubers or root tubers at the underground portions are cultivated by hydroponics, a separating member is used to separate the aboveground space where the aboveground portions grow and the underground space where the underground portions grow so that the underground portions are not exposed to light. By controlling the amount of light, the temperature, and the humidity of the space for the aboveground portions of plants such as stems and leaves, it is possible to grow the plants efficiently.

### CITATION LIST

### PATENT LITERATURE

Japanese Unexamined Patent Application Publication No. 2010-088425. Additionally, US5136804 discloses a hydroponic apparatus comprising a cultivation tank, a separator that separates a first and second space, an environmental control unit and a humidity control unit.

### SUMMARY OF INVENTION

### TECHNICAL PROBLEM

However, when decreasing the temperature of the space for the aboveground portions, there is a risk of causing condensation at the underground portions. If the stem tubers, the root tubers, or the like are kept in an excessively humid condition, it causes problems such as molds and physiological disorder. If the separating member described above is not provided to prevent these problems, the underground portions of the plants are exposed to light, and thus defects occur on the growth of the underground portions of the plants.

In view of the above problem, an object of the present invention is to provide a hydroponic apparatus and a hydroponic method in which condensation can be reduced at the underground portions of plants even though a separating member is provided.

### SOLUTION TO PROBLEM

To attain the above object, a hydroponic apparatus according to a first aspect of the present invention includes: a cultivation tank inside which a plant is held, and into a lower portion of which a nutrient solution is introduced; a separator that separates a first space where aboveground portions of the plant are positioned and a second space where underground portions of the plant are positioned; an environmental control unit that performs control of adjusting a temperature of the first space to a first temperature in a first period of a growing process for the plant, and adjusting the temperature of the first space to a second temperature lower than the first temperature in a second period of the growing process for the plant; and a humidity control unit that performs control to decrease a humidity of the second space when the growing period for the plant shifts from the first period to the second period.

A hydroponic apparatus according to a second aspect of the present invention is the hydroponic apparatus according to the first aspect, further including a detection unit that detects that operation of the environmental control unit shifts from operation for the first period to operation for the second period, in which when the detection unit detects a shift from the first period to the second period, the humidity control unit performs the control to decrease the humidity of the second space.

A hydroponic apparatus according to a third aspect of the present invention is the hydroponic apparatus according to the second aspect, further including a light amount measurement unit that measures the amount of light of the first space, in which the detection unit detects that the operation of the environmental control unit shifts from the operation for the first period to the operation for the second period, based on a change in the amount of light measured by the light amount measurement unit.

A hydroponic apparatus according to a fourth aspect of the present invention is the hydroponic apparatus according to the second aspect, further including a temperature measurement unit that measures the temperature of the first space, in which the detection unit detects that the operation of the environmental control unit shifts from the operation for the first period to the operation for the second period based on a change in the temperature measured by the temperature measurement unit.

A hydroponic apparatus according to a fifth aspect of the present invention is the hydroponic apparatus according to any one of first to fourth aspects, in which the separator includes a ventilation window that opens and closes between the first space and the second space, and the humidity control unit performs the control to decrease the humidity of the second space by opening the ventilation window.

A hydroponic apparatus according to a sixth aspect of the present invention is the hydroponic apparatus according to any one of first to fourth aspects, further including an outside air introduction unit that introduces air outside the cultivation tank into the second space, in which the humidity control unit performs the control to decrease the humidity of the second space by causing the outside air introduction unit to introduce the air outside the cultivation tank into the second space.

A hydroponic method according to a seventh aspect of the present invention is a hydroponic method of growing a plant with a hydroponic apparatus including a cultivation tank inside which the plant is held and into a lower portion of which a nutrient solution is introduced, and a separator that separates a first space where aboveground portions of the plant are positioned and a second space where underground portions of the plant are positioned, and the hydroponic method includes: performing control of adjusting a temperature of the first space to a first temperature in a first period of a growing period for the plant and adjusting the temperature of the first space to a second temperature lower than the first temperature in a second period of the growing period for the plant; and decreasing a humidity of the second space when the growing period for the plant shifts from the first period to the second period.

### ADVANTAGEOUS EFFECTS OF INVENTION

According to the present invention, it is possible to provide the hydroponic apparatus and the hydroponic method in which the condensation is reduced at the underground portions of the plants even though the separating member is provided.

### BRIEF DESCRIPTION OF DRAWINGS

[Fig. 1] Fig. 1 is a schematic perspective view for explaining a basic structure of a hydroponic apparatus according to an embodiment of the present invention.
[Fig. 2] Fig. 2 is a flowchart for explaining operation of an environmental control unit included in the hydroponic apparatus according to the embodiment of the present invention.
[Fig. 3] Fig. 3 is an example of a plant growing condition used in the hydroponic apparatus according to the embodiment of the present invention.
[Fig. 4] Fig. 4 is a flowchart for explaining operation of a humidity control unit included in the hydroponic apparatus according to the embodiment of the present invention.
[Fig. 5] Fig. 5 is a schematic perspective view for explaining a basic structure of a hydroponic apparatus according to another embodiment of the present invention.

### DESCRIPTION OF EMBODIMENTS

Next, referring to the drawings, an embodiment of the present invention is described. In the following descriptions on the drawings, the same or similar portions are denoted by the same or similar reference signs, and repeated descriptions thereof are omitted.

### (Hydroponic Apparatus)

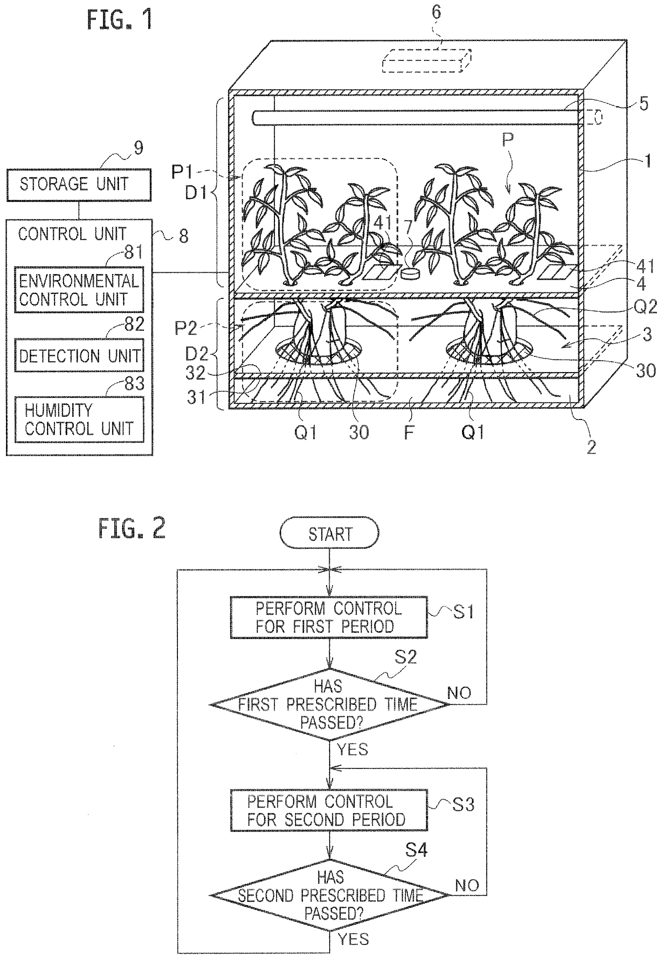

As illustrated in Fig. 1, a hydroponic apparatus according the embodiment of the present invention includes a cultivation tank 1, and a holder 3 that holds plants P, a separator 4, a light 5, an air conditioner 6, a measurement unit 7, a control unit 8, and a storage unit 9 inside the cultivation tank 1.

The plant P includes aboveground portions P1, which are stems and leaves, and underground portions P2 such as roots. An example of the plant P is a potato that yields stem tubers to store nutrients in the underground portions P2. The underground portions P2 include, for example, stem tubers (seed tubers), roots Q1 extending from the stem tubers, and stolons Q2. The plant P is not limited to a potato and may be any plant as long as the plant can be grow in the hydroponic apparatus according to the embodiment of the present invention.

The cultivation tank 1 is, for example, a water tank in a shape of a rectangular parallelepiped. The cultivation tank 1 is configured such that a nutrient solution F is introduced into the lower portion of the inside thereof. The cultivation tank 1 includes, for example, an inlet and an outlet, the illustration of which are omitted. The lower portion of the cultivation tank 1 serves as a flow path 2, through which the nutrient solution F circulates via the outside of the cultivation tank 1. Here, the cultivation tank 1 may be configured to store the nutrient solution F at the lower portion thereof.

The holder 3 is, for example, in a shape of a flat plate and is disposed horizontally above the nutrient solution F in the cultivation tank 1. The holder 3 includes, for example, a holding member 31 in a shape of a sheet having multiple through holes and a holding plate 32 in a shape of a flat plate fixed on the upper surface of the holding member 31. The holding member 31 includes a metal mesh having meshes as multiple through holes, for example. The holding plate 32 is made of resin material, for example. The holding plate 32 has multiple through holes with a size depending on the underground portions P2 of the plant P, for example.

The through holes of the holding plate 32 and the holding member 31 serves as holding areas 30 that hold a portion (seed tuber, for example) of the underground portions P2. The holding area 30 holds propagules such as root tubers, rhizomes, stem tubers, bulbs, scions, and runners on the upper surface of the holding member 31, for example. The multiple through holes of the holding member 31 located at the holding areas 30 have a size that allows the roots Q1 of the plant P to pass through, and thus it is possible to soak the roots Q1 into the nutrient solution F. Since the holder 3 allows the roots Q1 to be soaked into the nutrient solution F, feeding nutrients to the plants P can be started after planting.

In addition, the holder 3 holds products yielded in the course of growing, such as stem tubers. The stolons Q2 extend on the upper side of the holder 3 and yield the stem tubers at the distal ends thereof. The yielded stem tubers are held on the upper surface of the holding plate 32. The holder 3 holds the stem tubers of the plant P so that the necessary stem tubers are not soaked in the nutrient solution F. By doing so, defects of the plants P caused by excessive humidity, such as growth of bacteria and physiological disorder, can be reduced effectively.

The separator 4 is, for example, in a shape of a flat plate, and is disposed horizontally above the holder 3 in the cultivation tank 1. The separator 4 is made of plastic having a light blocking property, for example. The separator 4 separates a first space D1 where the aboveground portions P1 of the plant P are positioned and a second space D2 where the underground portions P2 of the plant P are positioned. The separator 4 includes multiple through holes with a size allowing the stems and leaves of the aboveground portions P1 to pass through. By blocking light emitted from the light 5, the separator 4 keeps dark the second space D2 where the underground portions P2 are positioned.

The separator 4 includes ventilation windows 41 that open and close between the first space D1 and the second space D2. The ventilation windows 41 open and close according to the control of the control unit 8. By opening and closing the ventilation windows 41, it is possible to bring the temperature and the humidity of the second space D2 and those of the first space D1 closer to each other.

The light 5 emits light according to the control of the control unit 8. The light 5 includes a lighting apparatus provided with a light emitting diode (LED), for example. The air conditioner 6 adjusts the temperature and the humidity of the first space D1 according to the control of the control unit 8. The measurement unit 7 functions as a temperature measurement unit that measures the temperature of the first space D1. The measurement unit 7 may be configured to function as a light amount measurement unit that measures the amount of light of the first space D1.

The control unit 8 includes an environmental control unit 81 and a detection unit 82, and a humidity control unit 83. The control unit 8 includes a processing unit that processes computations necessary to operate the hydroponic apparatus according to the embodiment of the present invention. The environmental control unit 81 controls the environment of the first space D1 by controlling the light 5, the air conditioner 6, and other units according to a predetermined plant growing condition

The detection unit 82 detects changes in the environment of the first space D1, for example, according to the predetermined plant growing condition. The detection unit 82 may detect changes in the environment of the first space D1 controlled according to the plant growing condition, based on changes in the temperature or the amount of light measured by the measurement unit 7.

The humidity control unit 83 controls the humidity of the second space D2, for example, by opening and closing the ventilation windows 41.

The storage unit 9 includes a storage apparatus that stores the plant growing condition necessary for operation of the environmental control unit 81. The contents of the plant growing condition can be changed with an input apparatus, the illustration of which is omitted. In addition, the storage unit 9 stores a program, a file, and the like necessary for the processing that the hydroponic apparatus according to the embodiment of the present invention performs.

### -Processing of Environmental Control Unit-

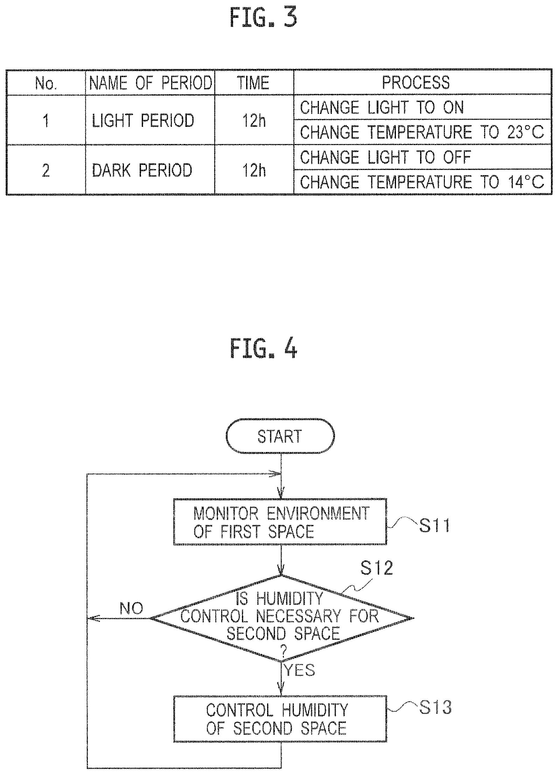

Using the flowchart of Fig. 2, an example of operation of the environmental control unit 81 is described. For example, assume that a plant growing condition as illustrated in Fig. 3 is set in the storage unit 9. In the plant growing condition illustrated in Fig. 3, a light period is set as a first period, and a dark period is set as a second period. In the light period, the state where the light 5 is on and the air conditioner 6 is set to 23°C continues for 12 hours, and in the dark period, the state where the light 5 is off and the air conditioner 6 is set to 14°C continues for 12 hours.

First, at step S1, the environmental control unit 81 reads out the plant growing condition from the storage unit 9, and the operation proceeds to the operation of the first period. The environmental control unit 81 causes the light 5 to emit light and controls the air conditioner 6 in the first period according to the plant growing condition to adjust the temperature of the first space D1 to 23°C (a first temperature).

In step S2, the environmental control unit 81 determines whether or not 12 hours have passed, which is the time set for the first period (a first prescribed time). If 12 hours have not passed, the environmental control unit 81 continues the process of step 1, and when 12 hours have passed, the environmental control unit 81 performs the process of step S3.

In step S3, the operation of the environmental control unit 81 proceeds to the operation for the second period. The environmental control unit 81 causes the light 5 to stop emission of light and controls the air conditioner 6 in the second period according to the plant growing condition to adjust the temperature of the first space D1 to 14°C (a second temperature).

In step S4, the environmental control unit 81 determines whether or not 12 hours have passed, which is the time set for the second period (a second prescribed time). If 12 hours have not passed, the environmental control unit 81 continues the process of step 3, and when 12 hours have passed, the environmental control unit 81 performs the process of step S1 again. As described above, the environmental control unit 81 can control the first space D1 such that the environment is suitable for growing the plants P according to the plant growing condition set in the storage unit 9.

### -Processing of Humidity control unit-

Using the flowchart in Fig. 4, an example of operation of the humidity control unit 83 is described.

First, at step S11, the detection unit 82 monitors the environment of the first space D1 by monitoring the operation of the environmental control unit 81 according to the plant growing condition. The detection unit 82 may monitor the environment of the first space D1 by monitoring changes in the temperature or the amount of light measured by the measuring unit 7.

At step S12, by the detection unit 82 detecting the change in the environment of the first space D1, the humidity control unit 83 determines whether or not it is necessary to control the humidity of the second space D2. For example, suppose the detection unit 82 detects the shift of operation of the environmental control unit 81 (a growing period for the plants P) from the first period to the second period. In this case, the humidity of the second space D2 has become high because there is the nutrient solution F at the lower portion. Here, since the temperature of the first space D1 decreases from the first temperature to the second temperature, which is lower than the first temperature, the humidity control unit 83 considers that condensation may occur at the underground portions P2 in the second space D2. As a result, the humidity control unit 83 determines that it is necessary to control the humidity of the second space D2.

Alternatively, the detection unit 82 may detect the shift of operation of the environmental control unit 81 (the growing period for the plants P) from the operation for the first period to the operation for the second period, based on the temperature measured by the measurement unit 7 falling below a threshold. Or, in the case where the set temperature of the air conditioner 6 is constant between the first period and the second period, it is considered that the temperature of the first space D1 changes depending on the amount of light. Hence, the detection unit 82 may detect the shift of operation of the environmental control unit 81 (the growing period for the plants P) from the operation for the first period to the operation for the second period, based on the amount of light measured by the measurement unit 7 falling below a threshold.

As described above, when the temperature of the first space D1 decreases and condensation may occur at the underground portions P2 in the second space D2, the humidity control unit 83 determines that it is necessary to control the humidity of the second space D2. In the case where it is not necessary to control the humidity of the second space D2, the humidity control unit 83 continues the process of step S11, and in the case where it is necessary to control the humidity of the second space D2, the humidity control unit 83 performs the process of step 13.

In step S13, the humidity control unit 83 performs control to open the ventilation windows 41, for example. By doing so, the temperature and the humidity of the first space D1 and those of the second space D2 come closer to each other. As a result, the humidity of the second space D2 in the second period becomes lower than in the first period. After step S13, the humidity control unit 83 performs the process of step S11 again.

As has been described above, the hydroponic apparatus according to the embodiment of the present invention is capable of decreasing condensation at the underground portions P2 of the plants P by controlling to decrease the humidity of the second space D2 based on detecting the change in the environment of the first space D1. Therefore, the hydroponic apparatus according to the embodiment of the present invention is capable of reducing growth of bacteria and physiological disorder such as enlarged lenticels caused by excessive humidity, and thus reducing defects of the plants P which reduce the commercial value of the products.

### (Another Embodiment)

Although the present invention has been described with the embodiment as above, it should not be understood that the descriptions and the drawings included in this disclosure limit the present invention. From this disclosure, various alternative embodiments, examples, and operational techniques will be apparent to those skilled in the art.

When the period for growing the plants shifts from the first period to the second period, the humidity control unit 83 only needs to performs control to decrease the temperature of the second space. For this reason, the detection unit 82 may detect that the operation of the environmental control unit 81 shifts from the operation in the first period to the operation in the second period, based on the time clocked by the timer provided therein reaching a prescribed time. Also in this case, when detecting that the operation of the environmental control unit 81 shifts from the operation in the first period to the operation in the second period, the humidity control unit 83 performs control to decrease the temperature of the second space. In addition, for example, in the embodiment already described, the humidity control unit 83 may be configured to read out the plant growing condition from the storage unit 9 and open the ventilation windows 41 at the time when shifting from the first period to the second period or the time preceding the shifting by a prescribed time (for example, 10 minutes). Moreover, the humidity control unit 83 may close the ventilation windows 41 when a prescribed time (for example, 30 minutes) has passed since the time of shifting from the second period to the first period. In these cases, the time for which the ventilation windows 41 are kept open is set to the extent that the light of the light 5 does not affect the underground portions P2.

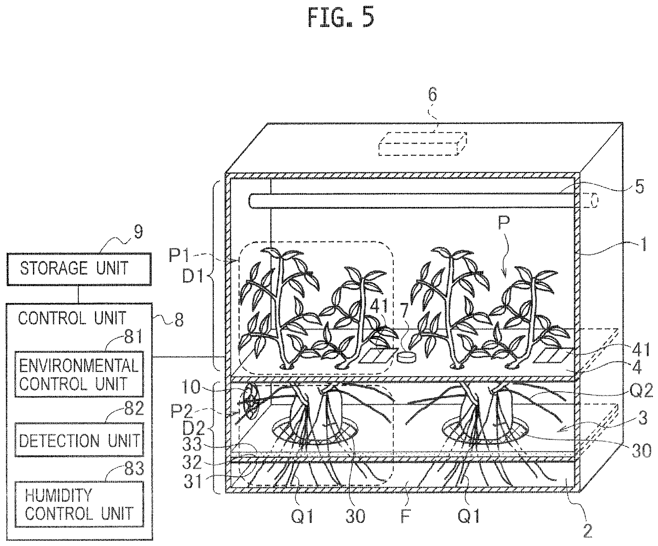

In addition, in the embodiment already described, the hydroponic apparatus may include an outside air introduction unit 10 at the second space D2 of the cultivation tank 1 as illustrated in Fig. 5 for introducing outside air into the cultivation tank 1. The outside air introduction unit 10 includes, for example, a fan driven according to control of the humidity control unit 83. In this case, at step 13 described above, the humidity control unit 83 can decrease the humidity of the second space D2 by controlling the outside air introduction unit 10.

In addition, in the embodiment already described, the holder 3 may include a drying portion 33 arranged on the upper surface of the holding plate 32 as illustrated in Fig. 5. The drying portion 33 includes a flat plate including silica gel, zeolite, or the like, and is capable of reducing the humidity of the portion of the second space D2 above the holder 3 more effectively.

In addition to the above, the present invention naturally includes various embodiments that are not described herein, such as a structure to which the embodiments and the modifications of the present invention are mutually applied. Accordingly, the technical scope of the present invention should be determined only by the matters to define the invention in the scope of claims

### REFERENCE SIGNS LIST

D1 First space
D2 Second space
F Nutrient solution
P Plant
P1 Aboveground portion
P2 Underground portion
1 Cultivation tank
4 Separator
7 Measurement unit (temperature measurement unit, light amount measurement unit)
10 Outside air introduction unit
41 Ventilation window
81 Environmental control unit
82 Detection unit
83 Humidity control unit

## Claims

1. A hydroponic apparatus comprising:
a cultivation tank (1) inside which a plant (P) is held, and into a lower portion of which a nutrient solution (F) is introduced;
a separator (4) that separates a first space (D1) where aboveground portions (P1) of the plant (P) are positioned and a second space (D2) where underground portions (P2) of the plant are positioned;
an environmental control unit (81) and a humidity control unit (83), **characterized in that** the environmental control unit (81) performs control of adjusting a temperature of the first space (D1) to a first temperature in a first period of a growing period for the plant (P), and adjusting the temperature of the first space (D1) to a second temperature lower than the first temperature in a second period of the growing period for the plant (P); and
the humidity control unit (83) performs control to decrease a humidity of the second space (D2) when the growing period for the plant (P) shifts from the first period to the second period.

2. The hydroponic apparatus according to claim 1, further comprising
a detection unit (82) that detects that operation of the environmental control unit (81) shifts from operation for the first period to operation for the second period, wherein
when the detection unit (82) detects a shift from the first period to the second period, the humidity control unit (83) performs the control to decrease the humidity of the second space.

3. The hydroponic apparatus according to claim 2, further comprising
a light amount measurement unit that measures the amount of light of the first space, wherein
the detection unit (82) detects that the operation of the environmental control unit (81) shifts from the operation for the first period to the operation for the second period, based on a change in the amount of light measured by the light amount measurement unit.

4. The hydroponic apparatus according to claim 2, further comprising
a temperature measurement unit that measures the temperature of the first space, wherein
the detection unit (82) detects that the operation of the environmental control unit (81) shifts from the operation for the first period to the operation for the second period, based on a change in the temperature measured by the temperature measurement unit.

5. The hydroponic apparatus according to any one of claims 1 to 4, wherein
the separator (4) includes a ventilation window that opens and closes between the first space (D1) and the second space (D2), and
the humidity control unit (83) performs the control to decrease the humidity of the second space by opening the ventilation window.

6. The hydroponic apparatus according to any one of claims 1 to 4, further comprising
an outside air introduction unit that introduces air outside the cultivation tank (1) into the second space (D2), wherein
the humidity control unit (83) performs the control to decrease the humidity of the second space (D2) by causing the outside air introduction unit to introduce the air outside the cultivation tank (1) into the second space.

7. A hydroponic method of growing a plant (P) with a hydroponic apparatus including a cultivation tank (1) inside which the plant (P) is held, and into a lower portion of which a nutrient solution (F) is introduced, and a separator (4) that separates a first space (D1) where aboveground portions of the plant (P) are positioned and a second space (D2) where underground portions of the plant (P) are positioned, the hydroponic method comprising:
performing control of adjusting a temperature of the first space (D1) to a first temperature in a first period of a growing period for the plant (P) and adjusting the temperature of the first space to a second temperature lower than the first temperature in a second period of the growing period for the plant (P); and
decreasing a humidity of the second space (D2) when the growing period for the plant shifts from the first period to the second period.

## Patentansprüche

1. Hydroponisches Gerät bzw. Hydrokultur-Vorrichtung, die Folgendes umfasst:
einen Kultivierungstank (1) in dessen Innenraum eine Pflanze (P) gehalten wird, und in dessen unteren Teil eine Nährlösung (F) eingebracht wird;
eine Trenneinrichtung (4), die einen ersten Raum (D1), in dem überirdische Abschnitte (P1) der Pflanze (P) angeordnet sind, von einem zweiten Raum (D2), in dem unterirdische Abschnitte (P2) der Pflanze angeordnet sind, trennt;
eine Einheit zur Steuerung von Umgebungsbedingungen (81) und eine Einheit zur Steuerung der Feuchtigkeit (83), **dadurch gekennzeichnet, dass** die Einheit zur Steuerung von Umgebungsbedingungen (81) eine Steuerung einer Anpassung der Temperatur des ersten Raums (D1) auf eine erste Temperatur in einem ersten Zeitabschnitt einer Wachstumsperiode für die Pflanze (P) durchführt, und eine Steuerung einer Anpassung der Temperatur des ersten Raums (D1) auf eine zweite Temperatur, die niedriger als die erste Temperatur ist, in einem zweiten Zeitabschnitt der Wachstumsperiode für die Pflanze (P); und dass die Einheit zur Steuerung der Feuchtigkeit (83) eine Steuerung zur Verringerung der Feuchtigkeit des zweiten Raums (D2) durchführt, wenn sich die Wachstumsperiode für die Pflanze (P) von der ersten Periode zur zweiten Periode verlagert.

2. Die Hydrokultur-Vorrichtung nach Anspruch 1, die des Weiteren Folgendes umfasst:
eine Erfassungseinheit (82), die erfasst, dass sich der Betrieb der Einheit zur Steuerung von Umgebungsbedingungen (81) von einem Betrieb für die erste Periode zu einem Betrieb für die zweite Periode verlagert, wobei
wenn die Erfassungseinheit (82) eine Verlagerung von der ersten Periode zur zweiten Periode erfasst, führt die Einheit zur Steuerung der Feuchtigkeit (83) die Steuerung durch, um die Feuchtigkeit des zweiten Raums zu verringern.

3. Die Hydrokultur-Vorrichtung nach Anspruch 2, die des Weiteren Folgendes umfasst:
eine Lichtmengen-Messeinheit, die die Lichtmenge des ersten Raums misst, wobei
die Erfassungseinheit (82) erfasst, dass sich der Betrieb der Einheit zur Steuerung von Umgebungsbedingungen (81) vom Betrieb für die erste Periode zum Betrieb für die zweite Periode, auf der Grundlage einer Veränderung der von der Lichtmengen-Messeinheit gemessenen Lichtmenge, verlagert.

4. Die Hydrokultur-Vorrichtung nach Anspruch 2, die des Weiteren Folgendes umfasst:
eine Temperatur-Messeinheit, die die Temperatur des ersten Raums misst, wobei
die Erfassungseinheit (82) erfasst, dass sich der Betrieb der Einheit zur Steuerung von Umgebungsbedingungen (81) vom Betrieb für die erste Periode zum Betrieb für die zweite Periode, auf der Grundlage einer Veränderung der von der Temperatur-Messeinheit gemessenen Temperatur, verlagert.

5. Die Hydrokultur-Vorrichtung nach irgendeinem der Ansprüche 1 bis 4, wobei
die Trenneinrichtung (4) ein Belüftungsfenster beinhaltet, das sich zwischen dem ersten Raum (D1) und dem zweiten Raum (D2) öffnet uns schließt und wobei
die Einheit zur Steuerung der Feuchtigkeit (83) die Steuerung durchführt, um die Feuchtigkeit des zweiten Raums durch das Öffnen des Belüftungsfensters zu verringern.

6. Die Hydrokultur-Vorrichtung nach irgendeinem der Ansprüche 1 bis 4, die des Weiteren Folgendes umfasst:
eine Außenluft-Einführeinheit, die Luft von außerhalb des Kultivierungstanks (1) in den zweiten Raum (D2) einführt, wobei
die Einheit zur Steuerung der Feuchtigkeit (83) die Steuerung durchführt, um die Feuchtigkeit des zweiten Raums (D2) zu verringern, indem sie die Außenluft-Einführeinheit dazu bringt, Luft von außerhalb des Kultivierungstanks (1) in den zweiten Raum einzuführen.

7. Ein hydroponisches bzw. Hydrokultur-Verfahren zur Aufzucht einer Pflanze (P) mit einer Hydrokultur-Vorrichtung, die Folgendes beinhaltet:
einen Kultivierungstank (1) in dessen Innenraum eine Pflanze (P) gehalten wird, und in dessen unteren Teil eine Nährlösung (F) eingebracht wird, und eine Trenneinrichtung (4), die einen ersten Raum (D1), in dem überirdische Abschnitte der Pflanze (P) angeordnet sind, von einem zweiten Raum (D2), in dem unterirdische Abschnitte der Pflanze (P) angeordnet sind, trennt, wobei das Hydrokultur-Verfahren Folgendes umfasst:
das Durchführen einer Steuerung zur Anpassung einer Temperatur des ersten Raums (D1) auf eine erste Temperatur in einem ersten Zeitabschnitt einer Wachstumsperiode für die Pflanze (P), und zur Anpassung der Temperatur des ersten Raums auf eine zweite Temperatur, die niedriger als die erste Temperatur ist, in einem zweiten Zeitabschnitt der Wachstumsperiode für die Pflanze (P); und
zur Verringerung einer Feuchtigkeit des zweiten Raums (D2), wenn sich die Wachstumsperiode für die Pflanze von der ersten Periode zur zweiten Periode verlagert.

## Revendications

1. Un appareil hydroponique comprenant :
un récipient de culture (1) à l'intérieur duquel une plante (P) est gardée, et dans une partie inférieure duquel est introduite une solution nutritive (F) ;
un séparateur (4) qui sépare un premier espace (D1), où sont positionnées des portions au-dessus du sol (P1) de la plante (P), et un deuxième espace (D2), où sont positionnées des portions souterraines (P2) de la plante ;
une unité de contrôle environnemental (81) et une unité de contrôle d'humidité (83), **caractérisé en ce que** l'unité de contrôle environnemental (81) réalise une commande de réglage d'une température du premier espace (D1) à une première température dans une première période d'une période de croissance pour la plante (P), et de réglage de la température du premier espace (D1) à une deuxième température inférieure à la première température dans une deuxième période d'une période de croissance pour la plante (P) ; et que l'unité de contrôle d'humidité (83) réalise une commande pour diminuer l'humidité du deuxième espace (D2) quand la période de croissance pour la plante (P) passe de la première période à la deuxième période.

2. L'appareil hydroponique d'après la revendication 1, comprenant en outre
une unité de détection (82) qui détecte que l'opération de l'unité de contrôle environnemental (81) passe d'une opération pour la première période à une opération pour la deuxième période, sachant que
quand l'unité de détection (82) détecte un passage de la première période à la deuxième période, l'unité de contrôle d'humidité (83) réalise la commande consistant à diminuer l'humidité du deuxième espace.

3. L'appareil hydroponique d'après la revendication 2, comprenant en outre
une unité de mesure de quantité de lumière qui mesure la quantité de lumière du premier espace, sachant que
l'unité de détection (82) détecte que l'opération de l'unité de contrôle environnemental (81) passe d'une opération pour la première période à une opération pour la deuxième période en se basant sur un changement de quantité de lumière mesurée par l'unité de mesure de quantité de lumière.

4. L'appareil hydroponique d'après la revendication 2, comprenant en outre
une unité de mesure de température qui mesure la température du premier espace, sachant que
l'unité de détection (82) détecte que l'opération de l'unité de contrôle environnemental (81) passe d'une opération pour la première période à une opération pour la deuxième période en se basant sur un changement de température mesuré par l'unité de mesure de température.

5. L'appareil hydroponique d'après une quelconque des revendications de 1 à 4, sachant que
le séparateur (4) inclut une fenêtre de ventilation qui s'ouvre et se ferme entre le premier espace (D1) et le deuxième espace (D2) et que
l'unité de contrôle d'humidité (83) réalise la commande consistant à diminuer l'humidité du deuxième espace en ouvrant la fenêtre de ventilation.

6. L'appareil hydroponique d'après une quelconque des revendications de 1 à 4, comprenant en outre
une unité d'introduction d'air extérieur qui introduit de l'air situé à l'extérieur du récipient de culture (1) dans le deuxième espace (D2), sachant que
l'unité de contrôle d'humidité (83) réalise la commande consistant à diminuer l'humidité du deuxième espace (D2) en amenant l'unité d'introduction d'air extérieur à introduire de l'air situé à l'extérieur du récipient de culture (1) dans le deuxième espace.

7. Un procédé hydroponique de culture d'une plante (P) avec un appareil hydroponique incluant
un récipient de culture (1) à l'intérieur duquel la plante (P) est gardée, et dans une partie inférieure duquel est introduite une solution nutritive (F), et un séparateur (4) qui sépare un premier espace (D1), où sont positionnées des portions au-dessus du sol de la plante (P), et un deuxième espace (D2), où sont positionnées des portions souterraines de la plante (P), le procédé hydroponique comprenant le fait de:
réaliser une commande de réglage d'une température du premier espace (D1) à une première température dans une première période d'une période de croissance pour la plante (P)
et de réglage de la température du premier espace à une deuxième température inférieure à la première température dans une deuxième période d'une période de croissance pour la plante (P) ;
de diminution de l'humidité du deuxième espace (D2) quand la période de croissance pour la plante passe de la première période à la deuxième période.
